(19) Europäisches Patentamt
European Patent Office
Office européen des brevets

(11) **EP 2 104 296 B1**

(12) **EUROPEAN PATENT SPECIFICATION**

(45) Date of publication and mention
of the grant of the patent:
**27.04.2011 Bulletin 2011/17**

(51) Int Cl.:
*H04L 27/26* (2006.01)   *H04B 7/005* (2006.01)

(21) Application number: **09164773.5**

(22) Date of filing: **07.03.2005**

(54) **Method for power control in wireless communication systems**

Verfahren zur Leistungssteuerung in drahtlosen Kommunikationssystemen

Procédé de regulation de puissance dans des systèmes de communication sans fil

(84) Designated Contracting States:
**AT BE BG CH CY CZ DE DK EE ES FI FR GB GR HU IE IS IT LI LT LU MC NL PL PT RO SE SI SK TR**

(30) Priority: **05.03.2004 US 550616 P**
**03.03.2005 US 72743**

(43) Date of publication of application:
**23.09.2009 Bulletin 2009/39**

(60) Divisional application:
**10173720.3 / 2 247 059**

(62) Document number(s) of the earlier application(s) in
accordance with Art. 76 EPC:
**05725049.0 / 1 730 916**

(73) Proprietor: **Qualcomm Incorporated**
**San Diego, CA 92121-1714 (US)**

(72) Inventors:
• **Naguib, Ayman, Fawzy**
**San Diego, CA-, 92121-1714 (US)**

• **Agrawal, Avneesh**
**San Diego, CA, 92121-1714 (US)**

(74) Representative: **Heselberger, Johannes**
**Bardehle Pagenberg**
**Galileiplatz 1**
**81679 München (DE)**

(56) References cited:
**WO-A-00/01084     WO-A-02/084935**

• **SUDO H ET AL: "OFDM TRANSMISSION DIVERSITY SCHEME FOR MMAC SYSTEMS" VTC 2000-SPRING. 2000 IEEE 51ST. VEHICULAR TECHNOLOGY CONFERENCE PROCEEDINGS - TOKYO, JAPAN, MAY 15-18, 2000, vol. VOL. 1 OF 3. CONF. 51, 15 May 2000 (2000-05-15), pages 410-414, XP000970651 NEW YORK, NY, USA ISBN: 0-7803-5719-1**

**Description**

**Field**

The present disclosure relates to communications systems, and amongst other things, to systems and techniques for controlling the power of signals transmitted in a wireless communication system.

**Background**

Modem communications systems are designed to allow multiple users to access a common communications medium. Examples of multiple access techniques that allow multi-user access to a communications medium include time division multiple-access (TDMA), frequency division multiple-access (FDMA), space division multiple-access, polarization division multiple-access, code division multiple-access (CDMA), orthogonal frequency multiple-access (OFDMA) and other similar multi-access techniques. The multiple-access concept is a channel allocation methodology which allows multiple user access to a common communications link. The channel allocations can take on various forms depending on the specific multi-access technique. By way of example, in FDMA systems, the total frequency spectrum is divided into a number of smaller sub-bands and each user is given its own sub-band to access the communications link. Alternatively, in TDMA systems, each user is given the entire frequency spectrum during periodically recurring time slots. In CDMA systems, each user is given the entire frequency spectrum for all of the time but distinguishes its transmission through the use of a code. In an OFDMA system, multiple users are assigned one or more sub-bands and one or more time-slots in each transmission frame or burst period.

Transmitted signals pass through a power amplifier, in order to provide sufficient power for transmission over the wireless channel, before being transmitted over the air. A power amplifier is usually a non-linear device which will generate signals in the modulated frequency band and signals, which are noise, outside of the modulated frequency band. In general, in a wireless communication system, all transmissions must meet a specific emission mask that limits the maximum amount of allowable out-of-band interference that any transmitter may cause. In order to minimize the amount of out-of-band interference due to the non-linearity of the power amplifier, the average power of the input signal is reduced or "backed off" from the maximum possible power that the power amplifier can provide. In addition or in lieu of back-off, the signal may be clipped at a maximum level after modulation but prior to amplification by the power amplifier.

Since the average power consumed by the power amplifier is generally constant during operation, increasing the back off and/or reducing the clipping level, in order to meet the emission mask, reduces the efficiency of the power amplifier, i.e. the power of the transmitted signal is less than available to the power amplifier. One of the problems associated with not maximizing efficiency of the power amplifier is a reduced useful battery life for the power being supplied.

From the document Sudo H et al. "OFDM Transmission diversity scheme for MMAC Systems" VTC 2000-Spring, 2000 IEEE 51ST. Vehicular technology conference proceedings - Tokyo, Japan, May 15-18, 2000, vol. VOL. 1 of 3. conf.51, 15 May 2000 (2000-05-15), pages 410-414, XP000970651 New York, NY, USA ISBN: 0-7803-5710-1, an OFDM wireless communication system is known in which the gain of each sub-carrier at the transmitter side is controlled. The bound of the maximum gain is controlled according to the number of sub-carriers in the transmission.

Further, document WO 00/01084 relates to power control in a multi-carrier radio transmitter. This document describes power control means to individually vary the power of each of a plurality of carriers before combination.

From document WO 02/084935 AI a method for determining the separate radio frequency gains for carriers in a multi-carrier transmitter of a radio transmission unit is known.

Therefore, it is desired to reduce the back-off and increase the clipping level as much as possible to meet the emission mask while maintaining efficiency.

**SUMMARY**

The invention is defined in independent claim 1.

In one aspect, a transmitter for a wireless communication system comprises an antenna, a modulator that modulates a signal comprising different carrier frequencies of a plurality of carrier frequencies for at least two symbols of the signal, a power amplifier coupled between the modulator and the antenna, and a processor a processor coupled with the power amplifier. The processor instructs the modulator to vary a power of the signal provided by the modulator in accordance with a relationship between the different carrier frequencies and the plurality of carrier frequencies.

In a further aspect, a transmitter for a wireless communication system comprises an antenna, a modulator that modulates a plurality of symbols of a signal utilizing a group of frequencies of a frequency range, a power amplifier coupled to the antenna, a non-linear processor coupled between the power amplifier and the modulator, and a processor that instructs the non-linear processor to vary a reduction of the power level of the signal based upon locations of the group of frequencies within the frequency range.

In another aspect, a method of varying a power level of wireless communication device comprises determining a sequence of frequencies to be transmitted, determining a location of at least some frequencies to be transmitted within a frequency band, and varying a power of signal provided to a power amplifier based upon the location of the at least some frequencies.

It is understood that other aspects of the present invention will become readily apparent to those skilled in the art from the following detailed description, wherein is shown and described only exemplary embodiments of the invention, simply by way of illustration. Accordingly, the drawings and description are to be regarded as illustrative in nature, and not as restrictive.

## BRIEF DESCRIPTION OF THE DRAWINGS

The features, nature, and advantages of the present invention will become more apparent from the detailed description set forth below when taken in conjunction with the drawings in which like reference characters identify correspondingly throughout and wherein:

FIG. 1 illustrates a block diagram of an embodiment of a transmitter system and a receiver system in a MIMO system;

FIG. 2 illustrates a block diagram of an embodiment of a transmitter providing back-off and/or clipping control based upon frequency;

FIGS. 3A-3C illustrate spectral diagrams of signals within an emission mask utilizing embodiments of power reduction based upon individual frequency locations;

FIG. 4 illustrates a flow chart illustrating an embodiment of a back-off and/or clipping control algorithm;

FIG. 5 illustrates a flow chart illustrating another embodiment of a back-off and/or clipping control algorithm;

FIG. 6 illustrates a block diagram of the application of a back-off and/or clipping control based upon hop region location in a hop period according to one embodiment;

FIG 7 illustrates a flow chart illustrating an additional embodiment of a back-off and/or clipping control algorithm;

FIG. 8 illustrates a spectral diagram of signals within an emission mask utilizing embodiments of power reduction based upon signal bandwidth; and

FIG. 9 illustrates a flow chart illustrating a further embodiment of a back-off and/or clipping control algorithm.

## DETAILED DESCRIPTION

The detailed description set forth below in connection with the appended drawings is intended as a description of exemplary embodiments and is not intended to represent the only embodiments in which the present invention can be practiced. The term "exemplary" used throughout this description means "serving as an example, instance, or illustration," and should not necessarily be construed as preferred or advantageous over other embodiments. The detailed description includes specific details for the purpose of providing a thorough understanding of the present invention. However, it will be apparent to those skilled in the art that the present invention may be practiced without these specific details. In some instances, well known structures and devices are shown in block diagram form in order to avoid obscuring the concepts of the present invention.

Multi-channel communication systems include multiple-input multiple-output (MIMO) communication systems, orthogonal frequency division multiplexing (OFDM) communication systems, MIMO systems that employ OFDM (i.e., MIMO-OFDM systems), and other types of transmissions. For clarity, various aspects and embodiments are described specifically for a MIMO system.

A MIMO system employs multiple ($N_T$) transmit antennas and multiple ($N_R$) receive antennas for data transmission. A MIMO channel formed by the $N_T$ transmit and $N_R$ receive antennas may be decomposed into $N_S$ independent channels, with $N_S \leq \min \{ N_T, N_R \}$. Each of the $N_S$ independent channels may also be referred to as a spatial subchannel (or transmission channel) of the MIMO channel. The number of spatial subchannels is determined by the number of eigenmodes for the MIMO channel, which in turn is dependent on a channel response matrix, $\underline{H}$, that describes the response between the $N_T$ transmit and $N_R$ receive antennas. The elements of the channel response matrix, $\underline{H}$, are composed of independent Gaussian random variables $\{h_{i,j}\}$, for $i = 1, 2, ... N_R$ and $j = 1, 2, ... N_T$, where $h_{i,j}$ is the coupling (i.e., the complex gain) between the $j$-th transmit antenna and the $i$-th receive antenna. For simplicity, the channel response matrix, $\underline{H}$, is assumed to be full-rank (i.e., $N_S = N_T \leq N_R$), and one independent data stream may be transmitted from each of the $N_T$ transmit antennas.

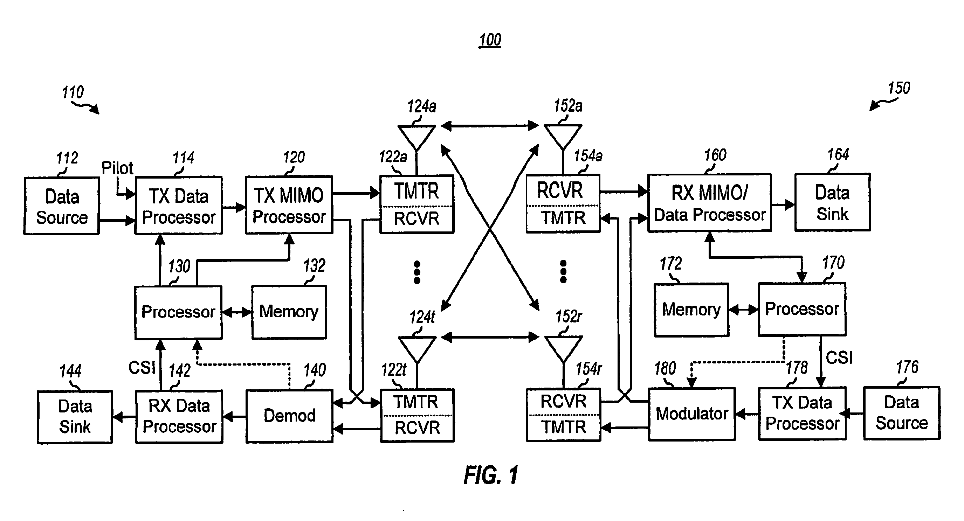

FIG. 1 is a block diagram of an embodiment of a transmitter system 110 and a receiver system 150 in a MIMO system 100. At transmitter system 110, traffic data for a number of data streams is provided from a data source 112 to a transmit (TX) data processor 114. In an embodiment, each data stream is transmitted over a respective transmit antenna. TX data processor 114 formats, codes, and interleaves the traffic data for each data stream based on a particular coding scheme selected for that data stream to provide coded data.

The coded data for each data stream may be multiplexed with pilot data using, for example, time division multiplexing (TDM) or code division multiplexing (CDM). The pilot data is typically a known data pattern that is processed in a known manner (if at all), and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by controls provided by a processor 130.

The modulation symbols for all data streams are then provided to a TX MIMO processor 120, which may further process the modulation symbols (e.g., for OFDM). TX MIMO processor 120 then provides $N_T$ modulation symbol streams to $N_T$ transmitters (TMTR) 122a through 122t. Each transmitter 122 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 122a through 122t are then transmitted from $N_T$ antennas 124a through 124t, respectively.

At receiver system 150, the transmitted modulated signals are received by $N_R$ antennas 152a through 152r, and the received signal from each antenna 152 is provided to a respective receiver (RCVR) 154. Each receiver 154 conditions (e.g., filters, amplifies, and downconverts) a respective received signal, digitizes the conditioned signal to provide samples, and further processes the samples to provide a corresponding "received" symbol stream.

An RX MIMO/data processor 160 then receives and processes the $N_R$ received symbol streams from $N_R$ receivers 154 based on a particular receiver processing technique to provide $N_T$ "detected" symbol streams. The processing by RX MIMO/data processor 160 is described in further detail below. Each detected symbol stream includes symbols that are estimates of the modulation symbols transmitted for the corresponding data stream. RX MIMO/data processor 160 then demodulates , deinterleaves, and decodes each detected symbol stream to recover the traffic data for the data stream. The processing by RX MIMO/data processor 160 is complementary to that performed by TX MIMO processor 120 and TX data processor 114 at transmitter system 110.

RX MIMO processor 160 may derive an estimate of the channel response between the $N_T$ transmit and $N_R$ receive antennas, e.g., based on the pilot multiplexed with the traffic data. The channel response estimate may be used to perform space or space/time processing at the receiver. RX MIMO processor 160 may further estimate the signal-to-noise-and-interference ratios (SNRs) of the detected symbol streams, and possibly other channel characteristics, and provides these quantities to a processor 170. RX MIMO/data processor 160 or processor 170 may further derive an estimate of the "operating" SNR for the system, which is indicative of the conditions of the communication link. Processor 170 then provides channel state information (CSI), which may comprise various types of information regarding the communication link and/or the received data stream. For example, the CSI may comprise only the operating SNR. The CSI is then processed by a TX data processor 178, modulated by a modulator 180, conditioned by transmitters 154a through 154r, and transmitted back to transmitter system 110.

At transmitter system 110, the modulated signals from receiver system 150 are received by antennas 124, conditioned by receivers 122, demodulated by a demodulator 140, and processed by a RX data processor 142 to recover the CSI reported by the receiver system. The reported CSI is then provided to processor 130 and used to (1) determine the data rates and coding and modulation schemes to be used for the data streams and (2) generate various controls for TX data processor 114 and TX MIMO processor 120.

Processors 130 and 170 direct the operation at the transmitter and receiver systems, respectively. Memories 132 and 172 provide storage for program codes and data used by processors 130 and 170, respectively.

The model for the OFDM MIMO system may be expressed as:

$$\underline{y} = \underline{H}\underline{x} + \underline{n} \ , \qquad\qquad\qquad Eq\ (1)$$

where $\underline{y}$ is the received vector, i.e., $\underline{y} = [y_1 \ y_2 \ ... \ y_{NR}]^T$ , where $\{y_i\}$ is the entry received on the $i$-th received antenna and $i \in \{1, ..., N_R\}$;

$\underline{x}$ is the transmitted vector, i.e., $x = [x_1 \ x_2 \ ... \ x_{NT}]^T$, where $\{x_j\}$ is the entry transmitted from the $j$-th transmit antenna and $j \in \{1, ..., N_T\}$;

$\underline{H}$ is the channel response matrix for the MIMO channel;

$\underline{n}$ is the additive white Gaussian noise (AWGN) with a mean vector of $\underline{0}$ and a covariance matrix of $\underline{\Lambda}_n = \sigma^2 \underline{I}$ , where $\underline{0}$ is a vector of zeros, $\underline{I}$ is the identity matrix with ones along the diagonal and zeros everywhere else, and $\sigma^2$ is the variance of the noise; and

$[.]^T$ denotes the transpose of $[.]$.

Due to scattering in the propagation environment, the $N_T$ symbol streams transmitted from the $N_T$ transmit antennas interfere with each other at the receiver. In particular, a given symbol stream transmitted from one transmit antenna may be received by all $N_R$ receive antennas at different amplitudes and phases. Each received signal may then include a component of each of the $N_T$ transmitted symbol streams. The $N_R$ received signals would collectively include all $N_T$ transmitted symbols streams. However, these $N_T$ symbol streams are dispersed among the $N_R$ received signals.

At the receiver, various processing techniques may be used to process the $N_R$ received signals to detect the $N_T$ transmitted symbol streams. These receiver processing techniques may be grouped into two primary categories:

- spatial and space-time receiver processing techniques (which are also referred to as equalization techniques), and
- "successive nulling/equalization and interference cancellation" receiver processing technique (which is also referred to as "successive interference cancellation" or "successive cancellation" receiver processing technique).

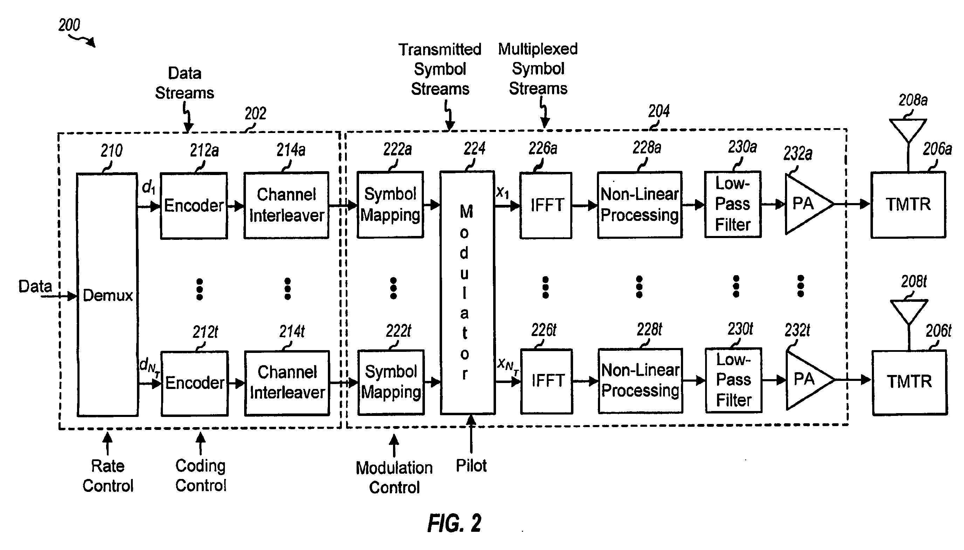

FIG. 2 is a block diagram of a portion of a transmitter unit 200, which may be an embodiment of the transmitter portion of a transmitter system, e.g. such as transmitter system 110 in FIG. 1. In one embodiment, a separate data rate and coding and modulation scheme may be used for each of the $N_T$ data streams to be transmitted on the $N_T$ transmit antennas (i.e., separate coding and modulation on a per-antenna basis). The specific data rate and coding and modulation schemes to be used for each transmit antenna may be determined based on controls provided by processor 130, and the data rates may be determined as described above.

Transmitter unit 200 includes, in one embodiment, a transmit data processor 202 that receives, codes, and modulates each data stream in accordance with a separate coding and modulation scheme to provide modulation symbols and transmit MIMO Transmit data processor 202 and transmit data processor 204 are one embodiment of transmit data processor 114 and transmit MIMO processor 120, respectively, of FIG. 1.

In one embodiment, as shown in FIG. 2, transmit data processor 202 includes demultiplexer 210, $N_T$ encoders 212a through 212t, $N_T$ channel interleavers 214a through 214t, and $N_T$ symbol mapping elements 216a through 216t, (i.e., one set of encoder, channel interleaver, and symbol mapping element for each transmit antenna). Demultiplexer 210 demultiplexes data (i.e., the information bits) into $N_T$ data streams for the $N_T$ transmit antennas to be used for data transmission. The $N_T$ data streams may be associated with different data rates, as determined by rate control functionality, which in one embodiment may be provided by processor 130 or 170 (FIG. 1). Each data stream is provided to a respective encoder 212a through 212t.

Each encoder 212a through 212t receives and codes a respective data stream based on the specific coding scheme selected for that data stream to provide coded bits. In one embodiment, the coding may be used to increase the reliability of data transmission. The coding scheme may include in one embodiment any combination of cyclic redundancy check (CRC) coding, convolutional coding, Turbo coding, block coding, or the like. The coded bits from each encoder 212a through 212t are then provided to a respective channel interleaver 214a through 214t, which interleaves the coded bits based on a particular interleaving scheme. The interleaving provides time diversity for the coded bits, permits the data to be transmitted based on an average SNR for the transmission channels used for the data stream, combats fading, and further removes correlation between coded bits used to form each modulation symbol.

The coded and interleaved bits from each channel interleaver 214a through 214t are provided to a respective symbol mapping block 222a through 222t, which maps these bits to form modulation symbols. The particular modulation scheme to be implemented by each symbol mapping block 222a through 222t is determined by the modulation control provided by processor 130. Each symbol mapping block 222a through 222t groups sets of $q_j$ coded and interleaved bits to form non-binary symbols, and further maps each non-binary symbol to a specific point in a signal constellation corresponding to the selected modulation scheme (e.g., QPSK, M-PSK, M-QAM, or some other modulation scheme). Each mapped signal point corresponds to an $M_j$-ary modulation symbol, where $M_j$ corresponds to the specific modulation scheme selected for the $j$-th transmit antenna and $M_j = 2^{q_j}$. Symbol mapping blocks 222a through 222t then provide $N_T$ streams of modulation symbols.

In the specific embodiment illustrated in FIG. 2, transmit MIMO processor 204 includes a modulator 224 and inverse Fourier transform (IFFT) block 226a through 226t. Modulator 224 modulates the samples to form the modulation symbols for the $N_T$ streams on the proper subbands and transmit antennas. In addition modulator 224 provides each of the $N_T$ symbol streams at a proscribed power level. In one emobiment, modulator 224 may modulate symbols according to a hopping sequence controlled by a processor, e.g. processor 130 or 170. In such an embodiment, the frequencies with which the $N_T$ symbol streams are modulated may vary for each group or block of symbols, frame, or portion of a frame of a transmission cycle.

Each IFFT block 226a through 226t, which along with an associated cyclic prefix generator (not shown) may comprise an OFDM modulator. Each IFFT block 226a through 226t receives a respective modulation symbol stream from modulator 224. Each IFFT block 226a through 226t groups sets of $N_F$ modulation symbols to form corresponding modulation symbol vectors, and converts each modulation symbol vector into its time-domain representation (which is referred to as an OFDM symbol) using the inverse fast Fourier transform. IFFT 222 may be designed to perform the inverse transform on any number of frequency subchannels (e.g., 8, 16, 32, ..., $N_F$).

Each time-domain representation of the modulation symbol vector generated by IFFT blocks 226a through 226t is provided to non-linear processing blocks 228a through 228t. In one embodiment, non-linear processing blocks 228a through 228t clip high amplitude, i.e. those that would result in a transmission power higher than a predetermined level, of each time-domain representation of the modulation symbol vector signals in the symbol. The clipped signal from non-linear processing blocks 228a through 228t is then provided to low pass filters 230a through 230t that are designed to remove out-of-band components of the clipped signal that result from clipping the time-domain representation of the modulation symbol vector signals. This is performed in order to, in one embodiment, reduce out-of-band interference generated by a power amplifier 232a through 232t through which the time-domain representation of the modulation symbol vector signals are passed. The power amplifiers 232a through 232t amplify the signals to provide appropriate power levels for transmission.

Since, power amplifiers 232a through 232t are non-linear devices, the signals provided by them will include out-of-band components. These components, much like those generated due to clipping by non-linear processing blocks 228a through 228t can cause interference to transmissions by other devices or neighboring transmitters that use adjacent frequency bands. In addition, the emission mask includes specific limits to out-of-band power that a wireless device generates. Therefore, there is a need to provide clipping and/or back-off from the maximum power at which the modulator may output signals, which will reduce the out-of-band emissions. However, both the back-off and clipping functionality reduce the power of signals provided to power amplifiers 232a through 232t, which reduce their efficiency since they are biased at a point that allows for substantially linear amplification at higher power levels than those provided to the power amplifiers 232a through 232t due to back-off and/or clipping.

As such, in one embodiment, a processor, e.g. processor 130 or 170 varies the level at which non-linear processing blocks 228a through 228t clip and/or the amount of back-off by modulator signals based upon a location of the frequencies that is being generated by modulator 224 to be transmitted on the particular antenna 208a through 208t to which the associated power amplifiers 232a through 232t are coupled. In this way, the efficiency of the power amplifier is maximized where possible while at the same time the emission mask is maintained as required.

In certain embodiments, power amplifiers 232a through 232t may be Class-A, Class-AB, Class-B, and Class-C amplifiers. Class-A amplifiers may be utilized due to, generally, providing a higher degree of linearity. However, Class-A amplifiers also generally less efficient than the other linear amplifier types. Other types of power amplifiers may also be utilized.

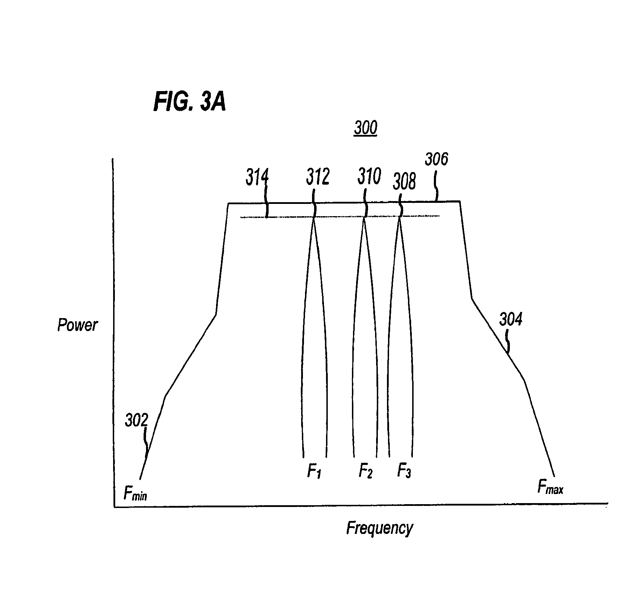

Referring to FIG. 3A, a spectral diagram of signals within an emission mask utilizing embodiments of power reduction based upon individual frequency locations is illustrated. Emission mask 300 includes edge region power levels 302, associated with minimum frequency $F_{min}$, and 304, associated with maximum frequency $F_{max}$, where $F_{min}$ and $F_{max}$ define the frequency band associated with the communication protocol(s) using which a transmitter, such as transmitter 200 operates.

During a symbol or a portion of one symbol, signal 312 is transmitted using frequency $F_1$, signal 310 is transmitted using frequency $F_2$, and signal 308 is transmitted using frequency $F_3$ from an antenna, e.g. antenna 208a. During the symbol or portion of a symbol illustrated in FIG. 3A, since frequencies $F_1$, $F_2$, and $F_3$ are each near or at a center of the band between frequencies $F_{min}$ and $F_{max}$ there needs to be little or no clipping and/or back-off. This can be seen in that power level 314 of signals 308, 310, and 312 are near a maximum power level 306 for in-band signals allowed by emission mask 300. In this way, when the signals are transmitted utilizing frequencies at or near the center of the frequency range, the power amplifier associated with the antenna transmitting the symbol or a portion of one symbol is utilized close to maximum efficiency.

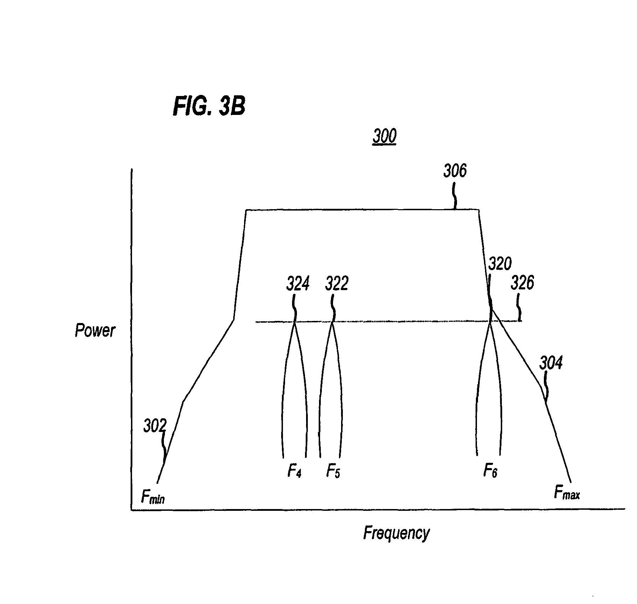

Referring to FIG. 3B, another symbol or portion of a symbol includes signal 320 transmitted using frequency $F_6$, signal 322 transmitted using frequency $F_5$, and signal 324 transmitted using frequency $F_4$ from an antenna, e.g. antenna 208a. During this frame, frequency $F_6$ is near a maximum frequency $F_{max}$ of the frequency band and therefore near edge region 304 of emission mask 300. Therefore, the maximum power level 326 of signal 320, and therefore of signals 322 and 324 is reduced so that it does not exceed the power level of edge region 304 of emission mask 300. The reduction may be provided by clipping and/or back-off. During the transmission frame of FIG. 3B, the out-of-band signal power is maintained within the emission mask and therefore out-of-band interference is within acceptable parameters.

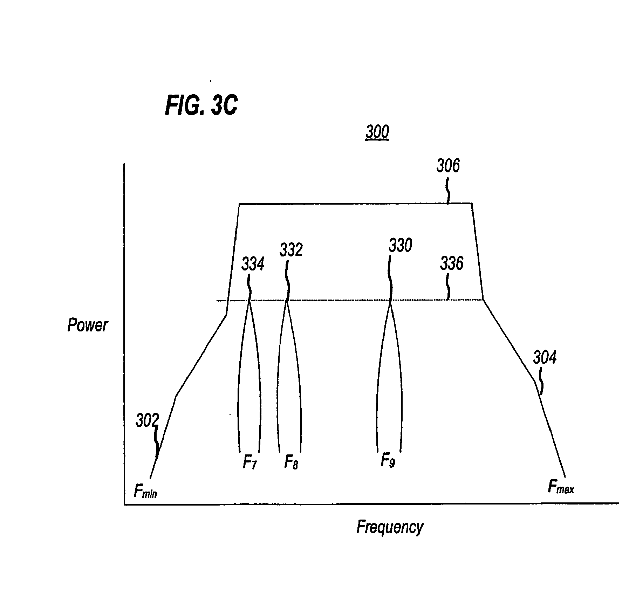

Referring to FIG. 3C, another symbol or portion of a symbol includes signal 330 transmitted using frequency $F_9$, signal 332 transmitted using frequency $F_8$, and signal 334 transmitted using frequency $F_7$ from an antenna, e.g. antenna 208a. During this frame, frequency $F_7$ is near a minimum frequency $F_{min}$ of the frequency band and therefore near edge region 304 of emission mask 300. Therefore, the maximum power level 336 of signal 334, and therefore of signals 330 and 332 is reduced so that it does not exceed the power level of edge region 302 of emission mask 300. The reduction may be provided by clipping and/or back-off. During this transmission frame, the out-of-band signal power is maintained within the emission mask and therefore out-of-band interference is within acceptable parameters.

It can be seen from FIGs. 3B and 3C that power level 336 is greater than power level 326. This is because, it is possible in this embodiment, to vary the clipping level and/or the back-off based upon a proximity of one or more signals to $F_{min}$ or $F_{max}$ For example, since $F_7$ is farther from $F_{min}$ than $F_6$ is from $F_{max}$ the appropriate clipping level and/or back-off may be less for signal 334 than it is for signal 320. As such, the efficiency of the power amplifier is maintained as close to the optimal level as possible based upon the locations of the frequencies to be transmitted by the antenna for the particular transmission symbol, portion of a symbol, group of symbols, frame, or portions of a frame. As such, the power output from each antenna for each symbol, portion of a symbol, group of symbols, frame, or portions of a frame may be independently controlled, thus simultaneously optimizing efficiency and maintaining out-of-band interference for each symbol, portion of a symbol, group of symbols, frame, or portions of a frame.

While FIGS. 3A-3C show three signals on three frequencies being utilized from transmission from a single antenna, the number of symbols or portions of a symbol utilized for back-off and/or clipping control may vary depending on symbol length and/or the length of the transmission frame.

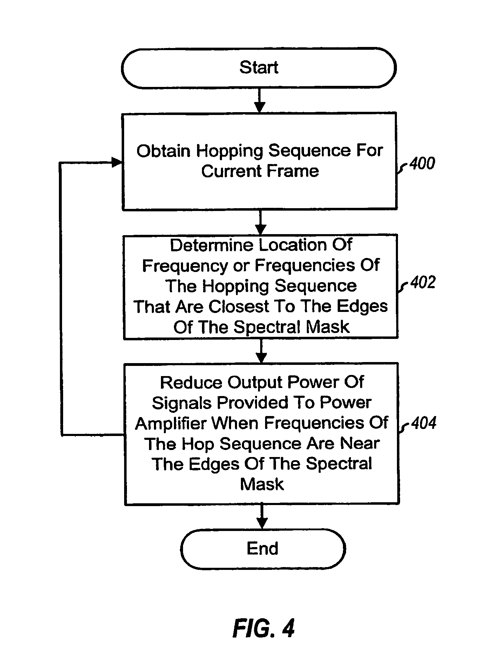

Referring to FIG. 4, a flow chart illustrating a back-off and clipping control algorithm according to one embodiment is illustrated. A sequence of frequencies for signals to be transmitted from a given antenna is determined, block 400. This sequence may be for a symbol, a portion of a symbol, a group of symbols, a frame, or a portion of a frame. Such information may be accessible to a processor that operates the wireless communication device. The frequency or frequencies of the sequence that are closest to the edges of the frequency band are then determined, block 402. The proximity may be, for example, (i) the closest frequency to either the minimum frequency or the maximum frequency; (ii) the closest frequency to the minimum frequency and the closest frequency to the maximum frequency; (iii) the frequencies that are within a fixed distance to both or either of the minimum frequency and the maximum frequency

The output power of signals provided to the power amplifier associated with the antenna are then reduced based upon the proximity of the frequencies of the sequence and the edges, i.e. the minimum and maximum frequencies of the frequency band in which the wireless communication device is to operate, block 404. The reduction, which may be provided by clipping and/or back-off, in power is performed to maintain a maximum power of the signals modulated using the frequency closest to the edges of the emission mask to be within the allowed out-of-band interference of the emission mask.

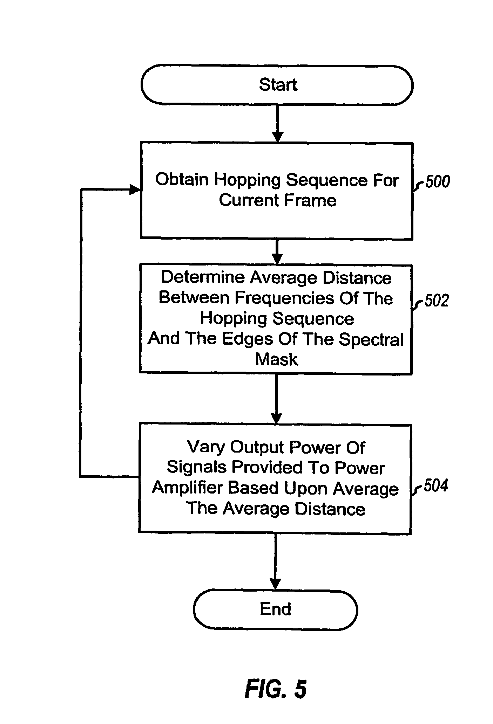

Referring to FIG. 5, a flow chart illustrating a back-off and clipping control algorithm according to one embodiment is illustrated is illustrated. A sequence of frequencies using which signals are to be transmitted from a given antenna is determined, block 500. This sequence may be for a symbol, a portion of a symbol, a group of symbols, a frame, or a portion of a frame. Such information may be accessible to a processor that operates the wireless communication device. The average distance of the frequencies of the sequence from the edges of the frequency band are then determined, block 502. The output power of signals provided to the power amplifier associated with the antenna are then reduced based upon this average distance, i.e. the average of the distance of each frequency to the minimum and/or maximum frequencies of the frequency band in which the wireless communication device is to operate, block 504. That is the lower the average, the greater back-off and/or lower clipping level is utilized. The use of an average may be beneficial; since each frequency regardless of location within the frequency band may have components that are out-of-band and therefore using an average value provides input from each component of out-of-band interference of the signal to be transmitted.

It should be noted that the above scheme may also be applied to a single frequency system where frequency hopping occurs. In such embodiment, the location of the single transmission frequency is determined with respect to the edges of the frequency band and clipping and/or back-off is provided appropriately as described herein.

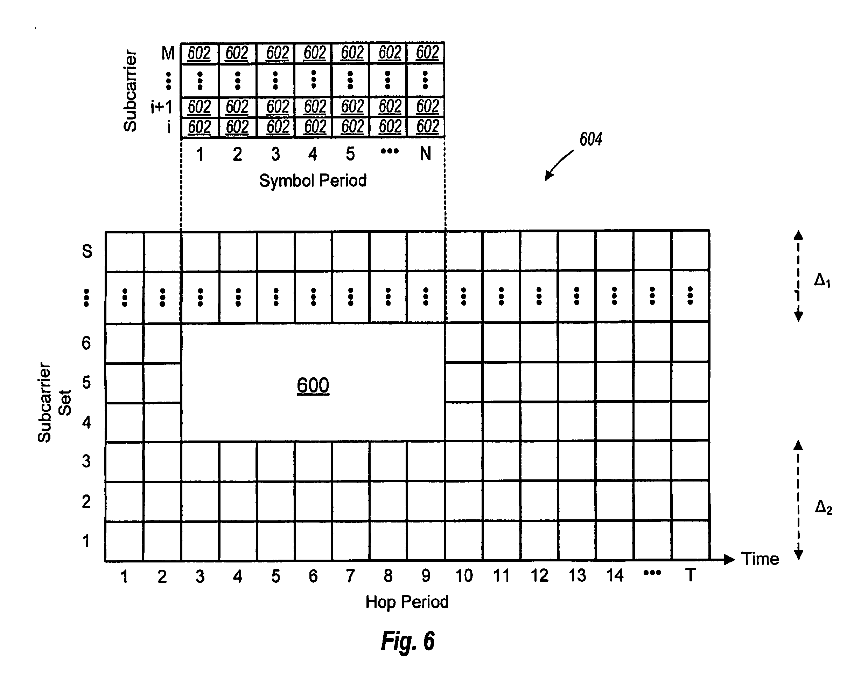

Referring to Fig. 6, a block diagram of the application of a back-off and/or clipping control based upon hop region location in a hop period according to one embodiment is illustrated. Hop region 600 comprises a plurality of symbol periods 602 that are capable of containing symbols that are modulated according to a specific carrier frequency in a contiguous range of carrier frequencies and within a contiguous group of symbol periods. Hop region 600 is assigned to a partial portion of hop period 604 which is a larger contiguous group of frequencies and symbol periods that comprise a burst transmission or frame available for transmission by the transmitter.

Any symbol transmitted within hop region 600 may have a maximum carrier frequency of M which is a distance $\Delta_1$ from the maximum carrier frequency S of the frequency band and a minimum carrier frequency of i which is a distance $\Delta_2$ from the minimum carrier frequency 1 of the frequency band. Therefore, in one embodiment the back-off and/or clipping level may be determined based upon $\Delta_1$ and $\Delta_2$, or possibly in some cases either of $\Delta_1$ and $\Delta_2$. This approach would require less changes to power levels output of the modulator and/or changes to the clipping level than altering either or both of these based upon the individual carrier frequencies of the individual signals that comprises the symbols or samples.

Further, in some embodiments, the approach of FIG. 6 may be combined with that of FIGS. 3A-3C by setting maximum and/or minimum clipping and/or back-off amounts based upon the hop region and then varying the clipping or back-off amounts for the individual carrier frequencies within the range set by the maximum and/or minimum clipping or back-off amounts, in those cases where hop regions are utilized as the hopping scheme.

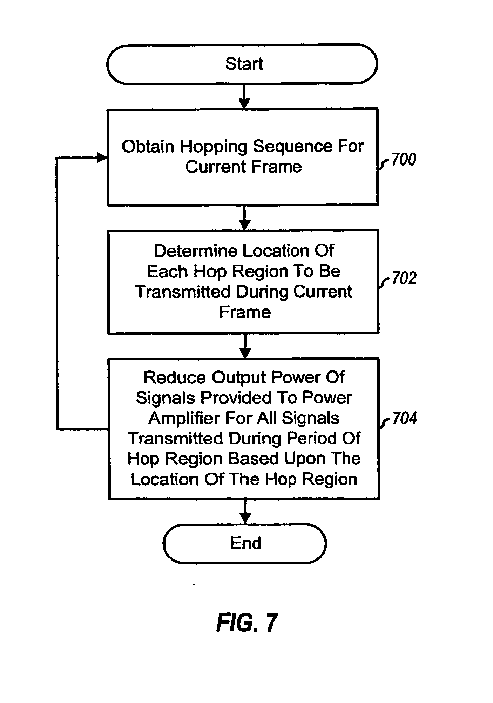

Referring to FIG. 7, a flow chart illustrating a back-off and clipping control algorithm according to one embodiment is illustrated. A location of a hop region within a hop period is determined, block 700. Such information may be accessible to a processor that operates the wireless communication device. The proximity of the maximum frequency of the hop region and the maximum frequency allocated to the transmitter or the hop period maximum frequency of the hop region and the maximum frequency allocated to the transmitter or the hop period and/or minimum frequency of the hop region and the minimum frequency allocated to the transmitter or the hop period maximum frequency of the hop region and the maximum frequency allocated to the transmitter or the hop period, block 702. The output power of signals provided to the power amplifier associated with the antenna are then reduced based upon either or both of these proximity determinations for all of the symbols transmitted in the hop region, block 704. The reduction in power is performed to maintain a maximum power of the signals modulated using the frequency closest to the edges of the emission mask to be within the allowed out-of-band interference of the emission mask.

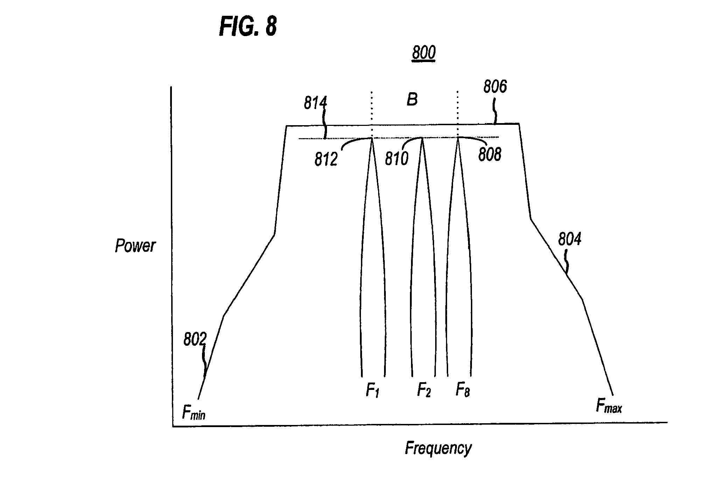

Referring to FIG. 8, a spectral diagram of signals within an emission mask utilizing embodiments of power reduction based upon signal bandwidth is illustrated. Emission mask includes edge region power levels 802, associated with minimum frequency $F_{min}$, and 804, associated with maximum frequency $F_{max}$, where $F_{min}$ and $F_{max}$ define the frequency band associated with the communication protocol(s) using which a transmitter, such as transmitter 200 operates. During a symbol or a portion of one symbol, signal 808 is transmitted using frequency $F_1$, signal 810 is transmitted using frequency $F_2$, and signal 812 is transmitted using frequency $F_3$ from an antenna, e.g. antenna 808a. The distance between frequencies $F_1$, the minimum frequency of the signals transmitted, and $F_3$, the maximum frequency of the signals transmitted, is the bandwidth $B$ of the signals transmitted. The clipping level and/or back-off can be based upon the bandwidth. For example, the greater the bandwidth B, the greater the clipping level and/or back-off. This approach would require less changes to power levels output of the modulator and/or changes to the clipping level than altering either or both of these based upon the individual carrier frequencies of the individual signals that comprises the symbols or samples.

Further, in some embodiments, the approach of FIG. 8 may be combined with that of FIGS. 3A-3C by setting maximum and/or minimum clipping or back-off amounts based upon the bandwidth $B$ and then varying the clipping or back-off amounts for the individual carrier frequencies within the range set by the maximum and/or minimum clipping or back-off amounts based upon the bandwidth $B$.

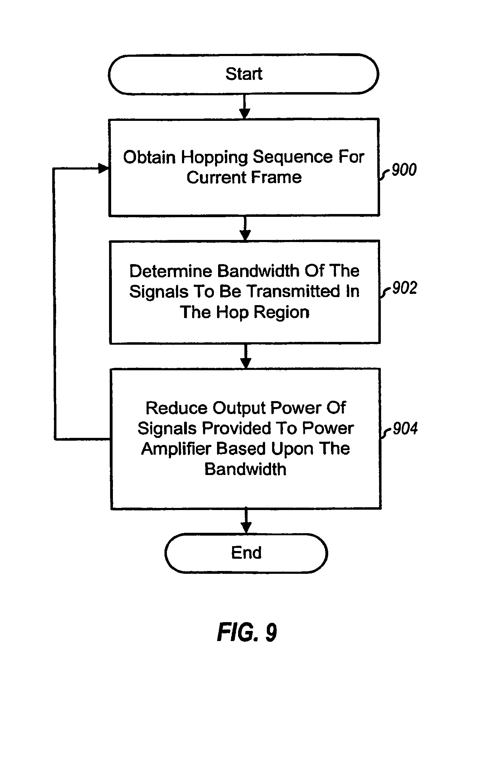

Referring to FIG. 9, a flow chart illustrating a further embodiment of a back-off and/or clipping control algorithm is illustrated. A sequence of frequencies using which signals are to be transmitted from a given antenna is determined, block 900. Such information may be accessible to a processor that operates the wireless communication device. The bandwidth of the frequencies of the signals to be transmitted is then determined, block 902. The output power of signals provided to the power amplifier associated with the antenna is then reduced based upon the bandwidth, block 904. The reduction in power is performed to maintain a maximum power of the signals modulated using the frequency closest to the edges of the emission mask to be within the allowed out-of-band interference of the emission mask.

Those skilled in the art will appreciate that the various illustrative logical blocks, modules, circuits, and algorithms described in connection with the embodiments disclosed herein may be implemented as electronic hardware, computer software, or combinations of both. To clearly illustrate this interchangeability of hardware and software, various illustrative components, blocks, modules, circuits, and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, processor, microprocessor, or state machine. A processor may also be implemented as a combination of computing devices, e.g., a combination of a DSP and a microprocessor, a plurality of microprocessors, one or more microprocessors in conjunction with a DSP core, or any other such configuration.

The methods or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

**Claims**

1. A method of varying a power level of signals provided to a power amplifier (232) of a transmitter (200) of a wireless communication device, comprising:

   determining a sequence of said signals to transmit at associated frequencies from an antenna; **characterized by** adjusting the power of said signals provided to the power amplifier based on proximity of at least one signal of the sequence of signals to at least one of a maximum or minimum frequency of a frequency band in which the wireless communication device is to operate.

2. The method of claim 1, further comprising:

   determining (502) an average difference between the associated frequencies and at least one of the maximum or minimum frequency of the frequency band;
   adjusting (504) the power of said signals provided to the power amplifier based on the average difference between the associated frequencies and the at least one of the maximum or minimum frequency of the frequency band.

3. The method of claim 1, further comprising:

   determining whether one or more frequencies associated with the sequence of signals are within a fixed distance in frequency from at least one of the maximum or minimum frequency of the frequency band; and reducing the power of said signals provided to the power amplifier to maintain a maximum power using the frequency of said associated frequencies which is closest to the maximum or minimum frequency of the frequency band.

4. The method of claim 1, wherein the sequence of signals is associated with at least one of a symbol, a portion of a symbol, a group of symbols, a frame, or a portion of a frame.

5. The method of claim 1, further comprising:

   determining a bandwidth of the frequencies associated with the sequence of signals; and
   further adjusting the power of said signals provided to the power amplifier based upon the bandwidth.

6. The method of claim 1, wherein the emission mask limits out-of-band interference when the signals are transmitted.

**Patentansprüche**

1. Verfahren zum Verändern einer Leistungshöhe eines Signals, das an einen Leistungsverstärker (232) eines Senders (200) eines drahtlosen Kommunikationsgeräts bereitgestellt wird, aufweisend:

   Bestimmen einer Folge von Signalen zum Übertragen mit zugeordneten Frequenzen von einer Antenne; **gekennzeichnet durch**
   Anpassen der Leistung der Signale, die an den Leistungsverstärker bereitgestellt werden, basierend auf einer Nähe von zumindest einem Signal der Folge von Signalen zu mindestens einer maximalen oder minimalen Frequenz eines Frequenzbands, in dem das drahtlose Kommunikationsgerät arbeitet.

2. Verfahren nach Anspruch 1, weiterhin aufweisend:

   Bestimmen (502) einer durchschnittlichen Differenz zwischen den zugeordneten Frequenzen und einer maximalen und / oder minimalen Frequenz des Frequenzbandes; und
   Anpassen (504) der Leistung der Signale, die an den Leistungsverstärker bereitgestellt werden, basierend auf der durchschnittlichen Differenz zwischen den zugeordneten Frequenzen und der maximalen und / oder minimalen Frequenz des Frequenzbands.

3. Verfahren nach Anspruch 1, weiterhin aufweisend:

   Bestimmen, ob eine oder mehrere Frequenzen, die der Folge von Signalen zugeordnet sind, innerhalb eines bestimmten Abstands in der Frequenz von einer maximalen und / oder minimalen Frequenz des Frequenzbands liegen; und

Verringern der Leistung der Signale, die an den Leistungsverstärker bereitgestellt werden, um eine maximale Leistung beizubehalten, unter Verwendung der Frequenz der zugeordneten Frequenzen, die der maximalen oder minimalen Frequenz des Frequenzbands am nächsten liegt.

4. Verfahren nach Anspruch 1, wobei die Folge von Signalen einem Symbol, einem Teil eines Symbols, einer Gruppe von Symbolen, einem Frame, und/oder einem Teil eines Frames zugeordnet ist.

5. Verfahren nach Anspruch 1, weiterhin aufweisend:

Bestimmen einer Bandbreite von Frequenzen, die der Folge von Signalen zugeordnet ist; und weiteres Anpassen der Leistung der Signale, die an den Leistungsverstärker bereitgestellt werden, basierend auf der Bandbreite.

6. Verfahren nach Anspruch 1, wobei die Emissionsmaske außerhalb des Frequenzbands liegende Interferenzen beschränkt, wenn die Signale übertragen werden.


## Revendications

1. Un procédé pour faire varier un niveau de puissance de signaux appliqués à un amplificateur de puissance (232) ou à un émetteur (200) d'un dispositif de communication sans fil, comprenant :

la détermination d'une séquence desdits signaux à émettre sur des fréquences associées à partir d'une antenne ;
**caractérisé par**
l'ajustement de la puissance desdits signaux appliqués à l'amplificateur de puissance en fonction de la proximité d'au moins un signal de la séquence de signaux avec au moins l'une d'une fréquence maximum ou minimum d'une bande de fréquences dans laquelle doit fonctionner le dispositif de communication sans fil.

2. Le procédé de la revendication 1, comprenant en outre :

la détermination (502) d'une différence moyenne entre les fréquences associées et au moins l'une de la fréquence maximum ou minimum de la bande de fréquences ; et
l'ajustement (504) de la puissance desdits signaux appliqués à l'amplificateur de puissance en fonction de la différence moyenne entre les fréquences associées et la au moins une de la fréquence maximum ou minimum de la bande de fréquences.

3. Le procédé de la revendication 1, comprenant en outre :

la détermination du point de savoir si une ou plusieurs fréquences associées à la séquence de signaux se situent dans les limites d'une distance fixe en fréquence par rapport à au moins l'une de la fréquence maximum ou minimum de la bande de fréquences ; et
la réduction de la puissance desdits signaux appliqués à l'amplificateur de puissance pour maintenir une puissance maximum en utilisant la fréquence desdites fréquences associées qui est la plus proche de la fréquence maximum ou minimum de la bande de fréquences.

4. Le procédé de la revendication 1, dans lequel la séquence de signaux est associée à au moins l'un d'un symbole, d'une partie d'un symbole, d'un groupe de symboles, d'une trame ou d'une partie d'une trame.

5. Le procédé de la revendication 1, comprenant en outre :

la détermination d'une largeur de bande des fréquences associées à la séquence de signaux ; et
l'ajustement additionnel de la puissance desdits signaux appliqués à l'amplificateur de puissance en fonction de la largeur de bande.

6. Le procédé de la revendication 1, dans lequel le masque d'émission limite l'interférence hors-bande lorsque les signaux sont émis.

**FIG. 1**

*100*

*110*

112 Data Source → 114 TX Data Processor (Pilot) → 120 TX MIMO Processor → 122a TMTR / RCVR → 124a antenna ... 122t TMTR / RCVR → 124t antenna

130 Processor — 132 Memory

140 Demod → 142 RX Data Processor (CSI) → 144 Data Sink

*150*

152a antenna → 154a RCVR / TMTR ... 152r antenna → 154r RCVR / TMTR

160 RX MIMO/ Data Processor → 164 Data Sink

170 Processor — 172 Memory — CSI

178 — 180 Modulator

176 Data Source → TX Data Processor

*FIG. 2*

**FIG. 3A**

EP 2 104 296 B1

EP 2 104 296 B1

FIG. 3B

EP 2 104 296 B1

**FIG. 3C**

_300_

Power

Frequency

Start

Obtain Hopping Sequence For
Current Frame *400*

Determine Location Of
Frequency or Frequencies Of
The Hopping Sequence
That Are Closest To The Edges
Of The Spectral Mask *402*

Reduce Output Power Of
Signals Provided To Power
Amplifier When Frequencies Of
The Hop Sequence Are Near
The Edges Of The Spectral
Mask *404*

End

*FIG. 4*

**FIG. 5**

**Fig. 6**

EP 2 104 296 B1

```
        ┌─────────────────────┐
        │        Start        │
        └─────────────────────┘
                   │
                   ▼
        ┌─────────────────────┐
        │ Obtain Hopping      │
   ┌───▶│ Sequence For        │  ⌐700
   │    │ Current Frame       │
   │    └─────────────────────┘
   │               │
   │               ▼
   │    ┌─────────────────────┐
   │    │ Determine Location  │
   │    │ Of Each Hop Region  │  ⌐702
   │    │ To Be Transmitted   │
   │    │ During Current      │
   │    │ Frame               │
   │    └─────────────────────┘
   │               │
   │               ▼
   │    ┌─────────────────────┐
   │    │ Reduce Output Power │
   │    │ Of Signals Provided │
   │    │ To Power Amplifier  │
   └────│ For All Signals     │  ⌐704
        │ Transmitted During  │
        │ Period Of Hop       │
        │ Region Based Upon   │
        │ The Location Of The │
        │ Hop Region          │
        └─────────────────────┘
                   │
                   ▼
        ┌─────────────────────┐
        │        End          │
        └─────────────────────┘
```

## FIG. 7

FIG. 8

Start

Obtain Hopping Sequence For Current Frame ⟋900

Determine Bandwidth Of The Signals To Be Transmitted In The Hop Region ⟋902

Reduce Output Power Of Signals Provided To Power Amplifier Based Upon The Bandwidth ⟋904

End

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0001084 A

- WO 02084935 A1

**Non-patent literature cited in the description**

- **Sudo H et al.** OFDM Transmission diversity scheme for MMAC Systems. *VTC 2000-Spring, 2000 IEEE 51ST. Vehicular technology conference proceedings,* 15 May 2000, vol. 1-3.conf, ISBN 0-7803-5710-1, 410-414